# EUROPEAN PATENT APPLICATION

(11) **EP 4 227 572 A1**
(43) Date of publication of application: **16.08.2023**
(21) Application number: 22156745.6
(22) Date of filing: 15.02.2022
(51) Int. Cl.: F17C 1/00

(54) **STORAGE TANK FOR GASEOUS HYDROGEN**

(71) Applicant: Parker Hannifin EMEA S.à.r.l., 1163 Etoy (CH)
(72) Inventor: Lengnowski, Andreas, 42653 Solingen (DE)
(74) Representative: Feucker, Max Martin

(57) **Abstract**

The present invention relates to a storage tank (1) for gaseous hydrogen, comprising:
- a tubular sleeve (2) made of steel,
- an end cap (3) closing an end of the tubular sleeve (2), wherein the tubular sleeve (2) and the end cap (3) are joined by plastic deformation of the tubular sleeve (2), and
- a intermediary layer (4) between the tubular sleeve (2) and the end cap (3).

## Description

The present invention relates to a storage tank for gaseous hydrogen and a storage tank system comprising multiple storage tanks. Such a hydrogen storage tank (also known as hydrogen accumulator) usually comprises a tubular sleeve and end caps closing the tubular sleeve at its ends.

JP 2017-180671 A suggests to embody the tubular sleeve as a double pipe structure with an inner pipe and an outer pipe. Also, the end caps are made of a double layer structure. It is the intension of JP 2017-180671 A to reduce the overall weight of hydrogen storage tank.

JP 2020-056457 A discloses a hydrogen storage tank, wherein an end cap is screwed into the tubular sleeve. Accordingly, the end cap comprises an outer thread and the tubular sleeve comprises an inner thread. Furthermore, a resin seal member is provided, with which the end cap is sealed against the inner surface of the tubular sleeve. As the resin seal member is not sufficient to completely block permeation of hydrogen, a gap between the end cap and the tubular sleeve is embodied, wherein permeated hydrogen can be flushed out of the gap before the hydrogen reaches the screw connection between the end cap and the tubular sleeve. Accordingly, by flushing the gap a permanent effort needs to be taken to avoid hydrogen induced cracking at locations, at which stress is applied to the end cap and/or the tubular sleeve during use, which stress usually occurs adjacent to the screw connection.

US 6,460,571 B1 discloses an accumulator for a hydraulic fluid, which is not capable for storing gaseous hydrogen.

It is an object of the present invention to avoid the draw backs of the prior art and in particular to provide a storage tank for gaseous hydrogen, which is easy to manufacture and which provides sufficient protection against leakage and hydrogen cracking.

A possible solution for this object is given with the storage tank comprising the features of independent claim 1. Further solutions and preferred embodiments are given in the dependent claims and in the description, wherein single features of the embodiments can be combined with each other in a technical meaningful manner.

The object is in particular solved with a storage tank for gaseous hydrogen, which storage tank comprises a tubular sleeve made of steel, an end cap closing an end of the tubular sleeve and an intermediary, preferably metallic layer between the tubular sleeve and the end cap, wherein the tubular sleeve and the end cap are joined by plastic deformation of the tubular sleeve.

In other words: The basic idea of the present invention is to connect the tubular sleeve and the end cap by plasticly deforming the tubular sleeve. Accordingly, by deforming the tubular sleeve the tubular sleeve is reshaped to a circumferential shape of the end cap, so that the end cap and the plasticly deformed tubular sleeve are joined/attached to each other. The deformation of the sleeve onto the outer contour of the end cap should be sufficient to avoid a flow of hydrogen between the inner of the tubular sleeve and the outer of the end cap, thereby providing a sealing effect. Plastic deformation of steel (of the tubular sleeve) is a standard procedure and therefore a secure and an easy to realize manufacturing step to provide a connection with the end cap. Such deformation of the tubular sleeve at its end section from its strictly cylindrical initial shape can for example be achieved by the forming processes of forging, rolling, drawing, shaping, pressing or stamping.

Furthermore, it is suggested that an intermediary layer, which is preferably embodied as a metallic layer, is arranged between the tubular sleeve made of steel and the end cap, wherein the intermediary layer is in particular arranged in such a way, that diffusion of gaseous hydrogen between the outer circumferential surface of the end cap and the inner circumferential surface of the tubular sleeve along a longitudinal axis towards the outside is avoided. The intermediary layer may extend along the circumferential surface of the end cap along the longitudinal axis completely. It may also be sufficient to arrange the intermediary layer only in a section of the circumferential surface in the direction of the longitudinal axis as long as the intermediary layer extends completely around the end cap in the circumferential direction. Applying an intermediary layer and preferably a metallic layer to the inner surface of the tubular sleeve or to the outer surface of the end cap is easy to implement in the production process.

Accordingly, the storage tank according to the present invention is easy to manufacture and provides protection against hydrogen cracking (also known as intergranular corrosion).

Preferably, the tubular sleeve is single walled, but it may be possible to provide a double walled structure, in which case it is sufficient, if only the inner wall is plasticly deformed to be joined with the end cap directly. By using steel as the material of the tubular sleeve a widely available and easy to manufacture material is used, so that no special material adapted to the storage of hydrogen is needed. Nevertheless, the inner surface of the tubular sleeve may be coated with any suitable material.

The end cap may be arranged within the tubular sleeve, so that the axial outer ends of the tubular sleeve and the end cap are more or less in the same plane.

In particular in this case it is suggested that the end cap is conical shaped towards its outer end (therefore its diameter decreases towards its outer end) and that the end section of the tubular sleeve is deformed inwards onto the conical section of the end cap.

In another embodiment, the end cap may comprise at least on annular groove formed in a circumferential surface of the end cap, wherein the tubular sleeve is mechanically deformed into the groove to join the end cap in a permanent and fluid tight manner to the tubular sleeve. Preferably in this embodiment the end cap may protrude over the end of the tubular sleeve.

In both cases, the intermediary layer (embodied preferably as metallic layer) is preferably arranged in a region, where the diameter of the end cap starts to decrease from a cylindrical (ring shaped section) section with a constant diameter (in particular at the start of a conical shaped section or at a start of the annular groove in the longitudinal direction), so that the intermediary layer is arranged at the region, where the outer sleeve is deformed over a contour of the end cap.

In all cases, in use the pressurized hydrogen forces the end cap against the deformed section of the tubular sleeve outwards in the longitudinal direction, whereas the highest stresses of the material of the tubular sleeve and/or of the end cap occur in these regions. By applying the intermediary layer at or adjacent to the surface of highly stressed material regions hydrogen cracking (intergranular corrosion) can be avoided.

In a preferred embodiment the groove includes a flat bottom and at least one side wall with a rounded portion, the side wall interconnecting the flat bottom with a ring-shaped section of the circumferential surface of the end cap, wherein preferably the side wall with the rounded portion is arranged at that side of the groove, which faces the inside of the storage tank. In this embodiment, the intermediary layer is preferably arranged on the ring shaped section and/or on the side wall with the rounded portion. Most preferably, the intermediary layer extends from the surface of the ring shaped section onto the surface of the side wall with the rounded portion.

While it is sufficient that the inventive joined connection between the tubular sleeve and the end cap is only embodied at one end of the tubular sleeve, in a preferred embodiment the inventive connection is used with an end cap at each end of the tubular sleeve. Accordingly, one end cap is arranged at each end side of the tubular sleeve.

The intermediary layer may be applied to the inner surface of the tubular sleeve at its end(s) or to the circumferential surface of the end cap prior to the deformation of the tubular sleeve. For example, the intermediary layer may be evaporated or deposited by a laser onto the respective surface of the tubular sleeve or of the end cap. Alternatively, the intermediary layer may be applied by electroplating or soldering. It might be sufficient, if only a few atomic layers of the (metallic) material are applied to the tubular sleeve or the end cap.

In a specific embodiment the intermediary layer may be formed by a soft metal and in particular by a non-ferrous metal, for example by a copper alloy. Such a non-ferrous metal is preferably applied by electroplating or soldering. If a soft metal and in particular a non-ferrous metal is used as metallic layer, the metallic layer preferably extends from the ring-shaped section of the circumferential surface to the flat bottom of the groove.

In a further specific embodiment the intermediary layer may be formed by a hard metal and in particular by a high-alloyed steel. In a high-alloyed steel at least one alloy element has a mass content of at least 5%. Such a high-alloyed steel is preferably applied by evaporation or laser deposition. If a hard metal and in particular a high-alloyed steel is used as metallic layer, the metallic layer preferably extends only in the transition region from the ring-shaped section of the circumferential surface to the (upper) side wall (which preferably has a rounded portion) of the groove. When using a hard metal and in particular a high-alloyed steel as metallic layer the end cap is preferably made of a cutable/machinable (in German: spanbar) and weldable material.

In a preferred embodiment the intermediary layer is made of meta and preferably of martensitic stainless steel.

In a preferred embodiment the material of the intermediary (preferably metallic) layer differs from the material of the tubular sleeve and of the material of the end cap.

An invention independent of the before described solution (deformed tubular sleeve and intermediary layer) is seen in that at least one valve is incorporated in the end cap of the storage tank. The incorporation of at least one valve into the end cap can also be combined with the before described invention. By incorporating a valve into the end cap a compact storage tank is provided, as the functional elements (valve) for withdrawing and/or releasing hydrogen from the inside of the tank do not need to be arranged outside the storage tank. Suitable valves for use with gaseous hydrogen are known and can be incorporated in the end cap.

For example, one valve might be embodied as an emergency valve, through which hydrogen can be released.

In a further embodiment, one valve connects the interior of the tank to a connector formed on the end cap to withdraw hydrogen during normal use. Accordingly, for normal operation a withdrawal line for hydrogen can be connected to the connector.

An actuator for actuating the valve may also be integrated into the end cap.

Furthermore, further functional elements, such as sensors (for example temperature sensor, pressure sensor) may be integrated into the end cap. The functional elements may be monitored and controlled by a wired or wireless connection, wherein in case of a wireless connection an electrical accumulator for providing energy to the actuator of the valve may also be integrated in the end cap.

It is also suggested that multiple storage tanks according to the present invention are used to form a storage tank system.

An invention independent of the before described solutions (deformed tubular sleeve with intermediary layer and valve incorporated in the end cap) is seen in a storage tank system, in which at least one end cap of each of all storage tanks comprises a line for hydrogen and wherein the lines of the end caps are connected to each other. By connecting the end caps of all storage tanks of the storage tank system the hydrogen can be withdrawn at only one port, so that the storage tank system can easily replace an existing system, which has only one storage tank.

Accordingly, each storage tank of the storage tank system has one end cap with a line, which end cap is connected to the end caps of the other storage tanks arranged on the same side of the tubular sleeves.

Basically, one or each end cap of each storage tank may have a valve integrated for withdrawing hydrogen from the respective storage tank.

In a preferred embodiment, only in the end cap of one storage tank at least one valve is incorporated. In this case, the end caps of the other storage tanks only comprise at least one line connecting the respective storage tank to the end cap of the storage tank having the at least one valve incorporated in its end cap. Accordingly, all functional elements of the whole storage tank system can be incorporated in the end cap of only one storage tank.

In order to further enhance the storage tank system, the end caps of multiple storage tanks are integrally formed in one block. In this case the end caps of the multiple storage tanks do not need to be elaborately connected to each other. In contrast, one block having multiple end caps is formed, wherein the tubular sleeves are connected to the respective end caps of the one block, in particular by plastically deforming the respective tubular sleeve. A respective block may be arranged at both end sides of the storage tank system giving the whole system a high stability. Arranging one block for multiple tubular sleeves at both ends of the tubular sleeves is only possible, if the tubular sleeves of all storage tanks have the same length.

Nevertheless, the suggested storage tank system is highly flexible, in that the storage tank system can be easily adapted to different installation sites differing in the available space. In this case, a tubular sleeve of at least one storage tank differs in its length and/or diameter from the tubular sleeves of the other storage tanks. For example, if the tubular sleeves differ in length to each other, the same kind of end cap can be used for all storage tanks. Accordingly, it is preferred, that the tubular sleeves of the storage tank only differ in length from each other.

The storage tank system preferably comprises at least three, and more preferably at least five storage tanks.

By using steel as the material for the tubular sleeve each storage tank or the storage tank system has a comparatively high weight (compared to systems/tanks using carbon based technologies for the tubular sleeve). It is suggested that the storage tank system is used as counter weight in large off-road vehicles. This way the storage tank system has two functions (providing hydrogen and providing a counter weight).

The invention and the technical background will now be described with regard to the figures. The figures depict schematically
- Figure 1:: a partly sectional view of a storage tank with a tubular sleeve and an end cap,
- Figure 2:: a cross section of a storage tank showing an end of the tubular sleeve and an end cap and
- Figure 3:: a storage tank system comprising multiple storage tanks.

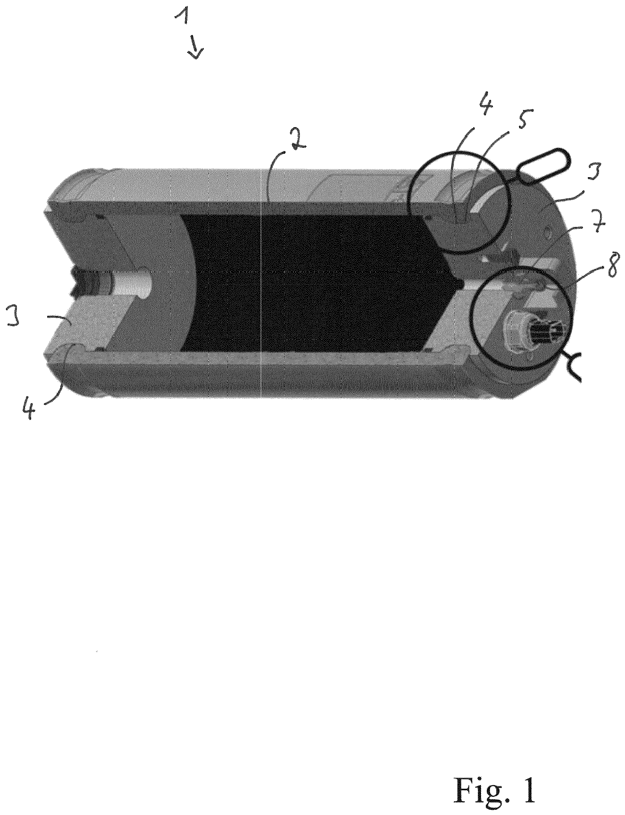

The storage tank 1 depicted in figure 1 comprises a tubular sleeve 2 made of steel, wherein end caps 3 are arranged at the ends of the tubular sleeve 2.

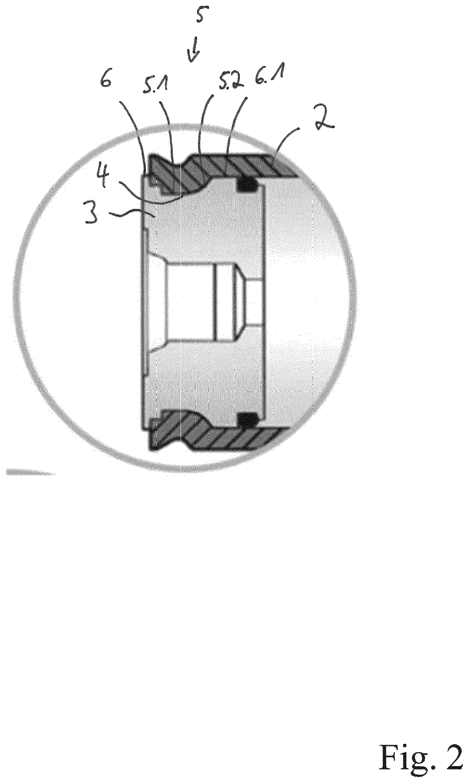

As can be seen best in Figure 2 the end caps 3 comprise a circumferential surface 6, in which an annular groove 5 is formed. The annular groove 5 comprises a flat bottom 5.1 and a side wall 5.2 with a rounded portion. Due to the annular groove 5 the circumferential surface 6 comprises a ring shaped section 6.1 arranged between the annular groove 5 and the inside of the storage tank 1.

A valve 7 is incorporated inside the end cap 3, wherein the valve 7 is connected to a connector 8, to which a withdrawal line for the gaseous hydrogen can be connected.

Furthermore, the storage tank 1 comprises a metallic layer 4, which is arranged between the circumferential surface 6 of the end cap 3 and the inner surface of the tubular sleeve 2.

The metallic layer 4 may be applied to the circumferential surface 6 of the end cap 3 or to the inner of the tubular sleeve 2 before the storage tank is assembled by evaporation or laser deposition. For assembly, the end cap 3 is inserted into an end of the initially completely cylindrically shaped tubular sleeve 2. The end section of the tubular sleeve 2 is subsequently plasticly deformed into the annular groove of the end cap 3. Such a deformation process is described in US 6,460,571 B1.

As the metallic layer 4 is arranged in a section, in which the tubular sleeve 2 is deformed and in which high stresses during normal use of the storage tank 1 occur, the hydrogen is prevented by the metallic layer 4 to induce intergranular corrosion.

By incorporating all functional elements such as valves 7 into the end cap 3 of the storage tank 1 a compact storage tank 1 is provided, which is easy to handle.

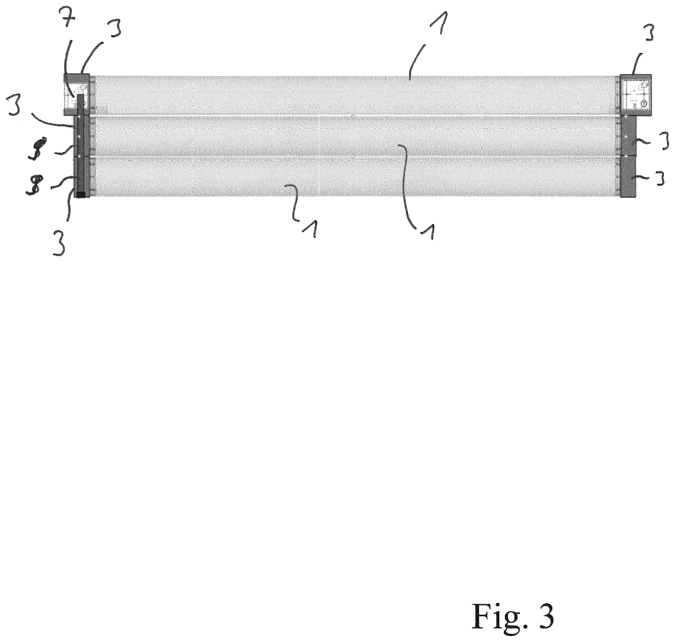

Figure 3 depicts a system comprising of multiple storage tanks 1. The end caps 3 of the storage tanks 1 comprise lines 9, which are interconnected. A valve 7 is arranged in only one end cap 3, so that hydrogen from all of the hydrogen tanks 1 can be withdrawn through the one valve 7.

### Reference signs

- 1: storage tank
- 2: tubular sleeve
- 3: end caps
- 4: metallic layer
- 5: annular groove
- 5.1: flat bottom
- 5.2: side wall
- 6: circumferential surface
- 6.1: ring shaped section
- 7: valve
- 8: connector
- 9: lines

## Claims

1. Storage tank (1) for gaseous hydrogen, comprising:
- a tubular sleeve (2) made of steel,
- an end cap (3) closing an end of the tubular sleeve (2), wherein the tubular sleeve (2) and the end cap (3) are joined by plastic deformation of the tubular sleeve (2), and
- an intermediary layer (4) between the tubular sleeve (2) and the end cap (3).

2. Storage tank (1) according to claim 1, wherein the end cap (3) comprises at least one annular groove (5) formed in a circumferential surface (6) of the end cap (3), wherein the tubular sleeve (2) is mechanically deformed into the groove (5) to join the end cap (3) in a permanent manner to the tubular sleeve (2).

3. Storage tank (1) according to claim 2, wherein the groove (5) includes a flat bottom (5.1) and at least one sidewall with a rounded portion, the side wall (5.2) interconnecting the flat bottom (5.1) with the circumferential surface (6) of the end cap (3).

4. Storage tank (1) according to one of the preceding claims, wherein the inner of the tubular sleeve (2) is coated at its end with the intermediary layer (4) prior to the deformation.

5. Storage tank (1) according to one of the preceding claims, **characterized in that** at least one valve (7) is incorporated in the end cap (3).

6. Storage tank (1) according to claim 5, wherein one valve (7) connects the interior of the tank (1) to a connector (8) formed on the end cap (3) to withdraw hydrogen during normal use.

7. Storage tank (1) according to claim 5 or 6, wherein one valve (7) is embodied as emergency valve.

8. Storage tank (1) according to one of the preceding claims, wherein the intermediary layer (4) is made of metal and preferably of martensitic stainless steel.

9. Storage tank system for gaseous hydrogen, comprising multiple storage tanks (1) according to one of the preceding claims, **characterized in that** at least one end cap (3) of each of all storage tanks (1) comprises at least one line (9) for hydrogen and wherein the lines (9) of the end caps (3) are connected.

10. Storage tank system according to claim 9, wherein at least one valve (7) is incorporated only in the end cap (3) of one storage tank (1).

11. Storage tank system according to one of claims 9 or 10, wherein the end caps (3) of multiple storage tanks (1) are integrally formed in one block.

12. Storage tank system according to one of claims 9 to 11, wherein a tubular sleeve (2) of at least one storage tank (1) differs in its length and/or diameter from the tubular sleeve(s) (2) of the other storage tank(s) (1).

13. Storage tank system according to one of claims 9 to 12, wherein the system comprises at least three storage tanks (1).

14. Using the storage tank system according to one of claims 9 to 13 as counter weight in a large off-road vehicle.
